**Europäisches Patentamt**

**European Patent Office**

**Office européen des brevets**

(19)

(11) Veröffentlichungsnummer: **0 049 899**

**A1**

(12) # EUROPÄISCHE PATENTANMELDUNG

(21) Anmeldenummer: **81108274.2**

(22) Anmeldetag: **13.10.81**

(51) Int. Cl.³: **B 23 K 9/04**

(30) Priorität: **14.10.80 DE 3038708**

(43) Veröffentlichungstag der Anmeldung:
**21.04.82 Patentblatt 82/16**

(84) Benannte Vertragsstaaten:
**AT BE DE FR GB IT NL SE**

(71) Anmelder: **Thyssen Aktiengesellschaft vorm. August Thyssen-Hütte**

**D-4100 Duisburg(DE)**

(72) Erfinder: **Müller, Egbert**
**Heymannstrasse 5**
**D-2000 Hamburg 20(DE)**

(72) Erfinder: **Krakow, Heinz**
**Paul-Roosen-Strasse 47**
**D-2000 Hamburg 50(DE)**

(72) Erfinder: **Tomsen, Harald**
**Bahrenfelder Chaussee 52**
**D-2000 Hamburg 50(DE)**

(74) Vertreter: **Patentanwältsburo Cohausz & Florack**
**Schumannstrasse 97**
**D-4000 Düsseldorf 1(DE)**

(54) **Verfahren und Vorrichtung zum Herstellen rotationssymmetrischer Werkstücke grosser Abmessungen.**

(57) Die Erfindung betrifft eine Vorrichtung zum Herstellen rotationssymmetrischer Werkstücke großer Abmessungen durch Schweißen, insbesondere Auftragsschweißen, auf einen rotierenden rotationssymmetrischen Grundkörper und spanende Bearbeitung der Außenflächen des Werkstücks. Der Schweißanlage ist mindestens ein parallel und senkrecht zur Rotationsachse des Grundkörpers bewegliches spanabhebendes Bearbeitungswerkzeug zugeordnet.

Fig.1

EP 0 049 899 A1

# COHAUSZ & FLORACK

0049899

PATENTANWALTSBÜRO

SCHUMANNSTR. 97 · D-4000 DÜSSELDORF

Telefon: (02 11) 68 33 46 · Telex: 0858 6513 cop d

PATENTANWÄLTE

Dipl.-Ing. W. COHAUSZ · Dipl.-Ing. R. KNAUF · Dipl.-Ing H B. COHAUSZ · Dipl.-Ing. D. H. WERNER

Thyssen Aktiengesellschaft
vorm. August Thyssen-Hütte
4100 Duisburg

12.10.1981

## Verfahren und Vorrichtung zum Herstellen rotationssymmetrischer Werkstücke großer Abmessungen

Die Erfindung betrifft ein Verfahren und eine Vorrichtung zum Herstellen rotationssymmetrischer Werkstücke großer Abmessungen durch Schweißen, insbesondere Auftragsschweißen auf einen rotierenden rotationssymmetrischen Grundkörper, und spanende Bearbeitung der Außenflächen des Werkstücks.

Die Oberfläche eines durch Schweißen, wie lagenweises Auftragsschweißen, Spiralnahtschweißen z.B. von Rohren od. dgl. hergestellten rotationssymmetrischen, insbe-

80/316
W/Ka

sondere zylindrischen Werkstücks muß mechanisch bearbeitet werden, um einen exakten Außendurchmesser (bis etwa 8 m und mehr) und eine glatte Oberfläche zu erhalten, die unter anderem zur Anwendung der erforderlichen Prüfverfahren erforderlich ist. Dies könnte beispielsweise auf einer dafür vorgesehenen Drehmaschine durchgeführt werden, jedoch wäre ein solches Aggregat für die großen Durchmesser und Stückgewichte bis zu 700 t aufwendig und teuer.

Aufgabe der vorliegenden Erfindung ist es, eine Vorrichtung der eingangs genannten Art zu schaffen, mit der die spanende Bearbeitung mit einfacheren und preiswerteren Mitteln durchgeführt werden kann.

Zur Lösung dieser Aufgabe wird erfindungsgemäß vorgeschlagen, daß der Schweißanlage mindestens ein parallel und senkrecht zur Rotationsachse des Grundkörpers bewegliches spanabhebendes Bearbeitungswerkzeug, insbesondere ein Fräs- oder Schleifwerkzeug zugeordnet ist.

Durch die erfindungsgemäß vorgeschlagene Lösung kann auf eine separate Zerspanungsmaschine, beispielsweise eine Drehmaschine, verzichtet und die spanende Bearbeitung in der Vorrichtung, in der die Welle oder der Behälter durch Schweißen hergestellt wird und die bereits über alle Mittel zum Lagern und Drehen des Werkstücks verfügt, vorgenommen werden. Es wird also für die mechanische Bearbeitung durch Fräsen oder Schleifen zusätzlich nur noch der Werkzeugkopf und ein Schlitten mit Antrieb für diesen benötigt. Mit Hilfe des spanabhebenden Bearbeitungswerkzeugs können Umfang und Stirnseiten des Werkstücks bearbeitet werden.

Eine separate Bearbeitungsmaschine, z.B. eine Drehmaschine, hätte neben dem schon erwähnten Kostenaufwand auch noch den Nachteil, daß sie nur zu 1/10 ausgelastet wäre. Während nämlich der Zeitaufwand für die Fertigstellung des Werkstücks durch Auftragsschweißen in der Größenordnung von 1500 Stunden liegt, sind etwa nur 150 Stunden, also 1/10 der Schweißzeit für die mechanische Oberflächenbearbeitung erforderlich. Die Zerspanungsmaschine wäre mithin zu 9/10 der Zeit nicht ausgelastet. Wird die Oberfläche des Werkstücks auf der erfindungsgemäßen Vorrichtung für die hierfür etwa erforderlichen 150 Stunden mechanisch bearbeitet, so muß die Schweißanlage nur für die verhältnismäßige kurze Zeit stillgesetzt werden, bis die Herstellung eines weiteren Werkstücks durch Schweißen begonnen werden kann.

Wird nun nach einem weiteren Vorschlag der Erfindung die mechanische Bearbeitung durchgeführt, während die letzte Schweißlage gelegt wird, kann auch diese Stillstandszeit der Schweißeinrichtung noch erheblich verkürzt und auf wenige Stunden reduziert werden. Da die Umdrehungsgeschwindigkeit des Werkstücks für das Schweißen und das mechanische Bearbeiten gleich groß sein können, kann die mechanische Bearbeitung der Außenflächen des Werkstücks etwas zeitlich versetzt zum Beginn des Abschmelzens der letzten Schweißlage begonnen werden. In diesem zeitlichen Abstand folgt das spanabhebende Bearbeitungswerkzeug der Schweißeinrichtung entlang der Mantellinie des Werkstücks. Auf diese Weise ist die mechanische Bearbeitung schon kurze Zeit nach Beendigung des Legens der letzten Schweißlage abgeschlossen.

Die Erfindung wird im folgenden anhand der Zeichnung näher erläutert.

Es zeigen:

Fig. 1     einen Querschnitt durch eine Vorrichtung
           gemäß der Erfindung,

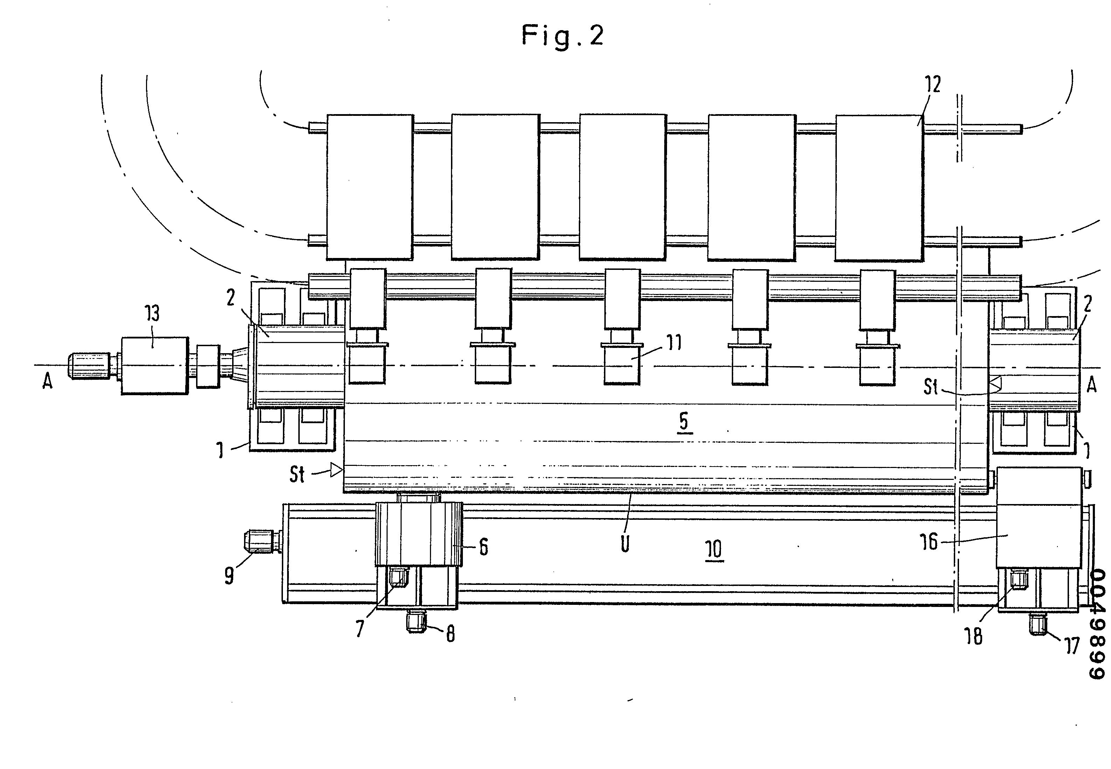

Fig. 2     eine Draufsicht der Vorrichtung nach Fig. 1,

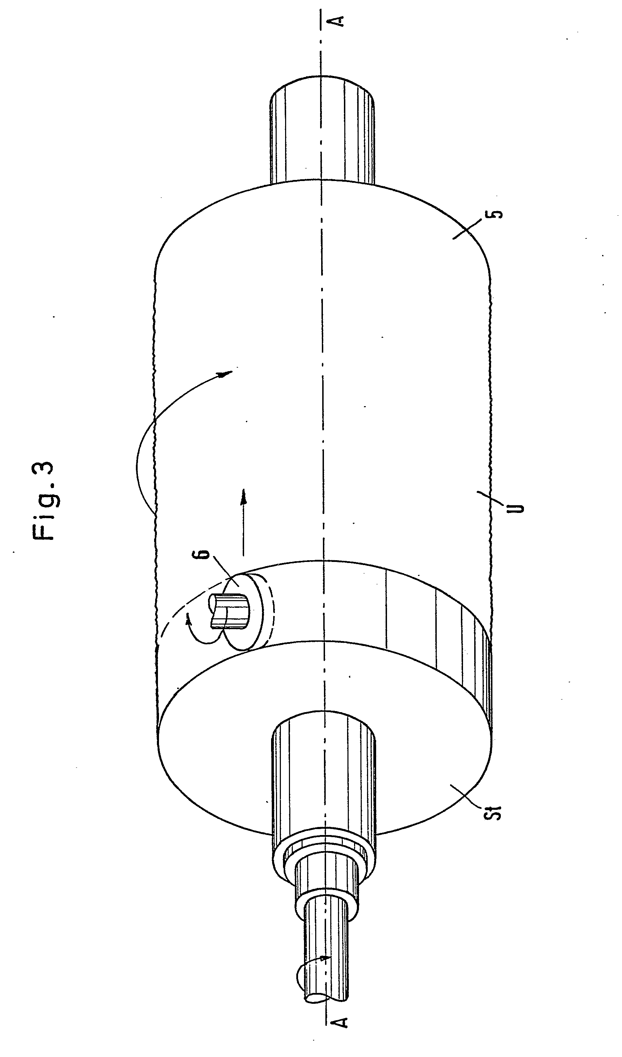

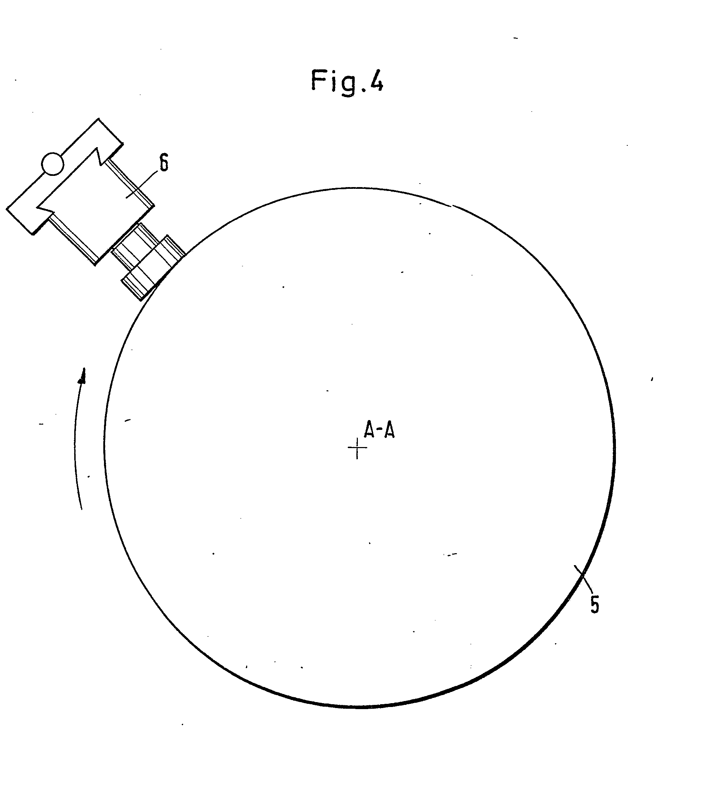

Fig. 3+4   eine perspektivische Seitenansicht und einen
           dazugehörigen Querschnitt von Werkstück und
           Bearbeitungswerkzeug.

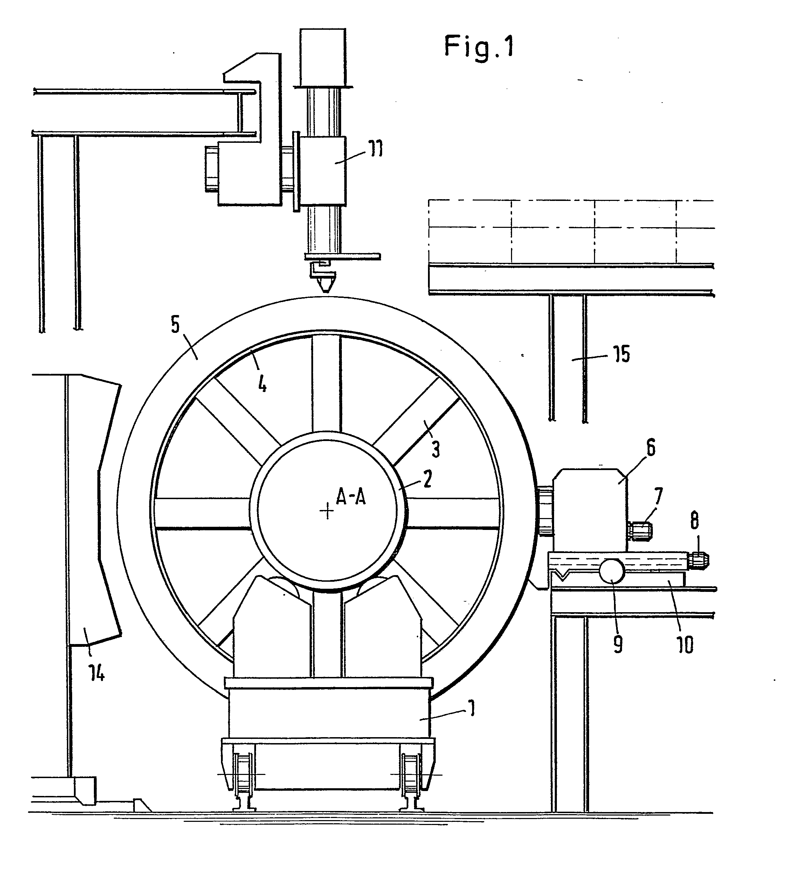

Wie Fig. 1 zeigt, ruht das Werkstück 5, das mittels der
fahrbaren Schweißanlage 11 mit Versorgungswagen 12 auf
dem Grundkörper 4 durch Auftragsschweißung entsteht,
über Speichen 3 auf den Zapfen 2 der Aufnahmevorrichtung
und dem Aufnahmewagen 1 und rotiert mit Hilfe des Drehantriebs 13 um die Achse A-A mit Schweißgeschwindigkeit. Eine
Fräseinheit 6 ist zur Bearbeitung des Umfangs des zylindrischen Werkstücks 5 und eine Fräseinheit 16 zur Bearbeitung der Stirnseiten St angeordnet.

Die Fräseinheit 6 wird von dem Motor 7 angetrieben. Die
Motoren 8 und 9 dienen der Quer- und Längsverstellung
der Fräseinheit 6 gegenüber dem Fundament 10. Die Fräseinheit 16 wird von dem Motor 17 angetrieben, und der
Motor 18 dient dem Radialvorschub der Fräseinheit 16.

Eine Körperheizung für die Wärmebehandlung während der
Auftragsschweißung ist mit 14 und die Bedienungsbühne
mit 15 bezeichnet.

Nachdem das zylindrische Werkstück 5 seine endgültige
Stärke erreicht hat, kann es mit der gleichen Geschwindigkeit wie beim Schweißvorgang weiter rotieren. Zur
Bearbeitung der Oberfläche des Werkstücks 5 werden die

- 5 -

der Vorrichtung zur Herstellung der Werkstücke durch Auftragsschweißung zugeordneten Fräseinheiten 6 und 16 an dem Werkstück 5 für die Bearbeitung der Mantelfläche bzw. für die Bearbeitung der Stirnseiten in Arbeitsstellung gebracht. Entsprechend dem eingestellten Vorschub wandert das Fräswerkzeug 6 axial entlang der Werkstückmantelfläche und das Fräswerkzeug 16 radial zum Drehzentrum der Achse A-A des Werkstücks 5.

## COHAUSZ & FLORACK

**PATENTANWALTSBÜRO**

**SCHUMANNSTR. 97 · D-4000 DÜSSELDORF**

Telefon: (02 11) 68 33 46          Telex: 0858 6513 cop d

**0049899**

PATENTANWÄLTE:

Dipl.-Ing. W COHAUSZ · Dipl-Ing R. KNAUF · Dipl.-Ing. H. B. COHAUSZ · Dipl.-Ing. D. H. WERNER

– 6 –

## Ansprüche

1. Vorrichtung zum Herstellen rotationssymmetrischer Werkstücke großer Abmessungen durch Schweißen, insbesondere Auftragsschweißen auf einen rotierenden rotationssymmetrischen Grundkörper und spanende Bearbeitung der Außenflächen des Werkstücks, d a d u r c h   g e k e n n z e i c h n e t , daß der Schweißanlage (11) mindestens ein parallel und senkrecht zur Rotationsachse (A-A) des Grundkörpers (4) bewegliches spanabhebendes Bearbeitungswerkzeug (6, 16) zugeordnet ist.

2. Verfahren zum Betrieb der Vorrichtung gemäß Anspruch 1, d a d u r c h   g e k e n n z e i c h n e t , daß die spanende Bearbeitung des Umfangs (U) und der Stirnflächen (St) des Werkstücks (5) während des Abschmelzens der letzten (äußeren) Schweißlage durchgeführt wird.

Fig.1

0049899

# Fig.2

# Fig.3

Fig.4

**Europäisches Patentamt**

# EUROPÄISCHER RECHERCHENBERICHT

EP 81 10 8274

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | <u>FR - A - 1 550 978</u> (MITSUBISHI)<br><br>* Seite 5, Spalte 1 *<br>& US - A - 3 558 846<br><br>-- | 1,2 | B 23 K 9/04 |
| | <u>US - A - 2 062 460</u> (PEABODY)<br><br>* Figur 1; Seite 4, rechte Spalte, Zeilen 10-21 *<br><br>-- | 1,2 | |
| | <u>FR - A - 2 300 652</u> (HEALEY)<br><br>* Seite 6, Zeilen 19,20 *<br>& NL - A - 76 01 503<br><br>-- | 1,2 | RECHERCHIERTE SACHGEBIETE (Int. Cl.³)<br><br>B 23 K 9/04 |
| | <u>DE - C - 423 108</u> (WARNING)<br><br>* Seite 2, Zeilen 50-67 *<br><br>------- | 1,2 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19.01.1982 | HOORNAERT |

EPA form 1503.1   06.78